Europäisches Patentamt

European Patent Office

Office européen des brevets

(11) Publication number: **0 302 718**
**A1**

# EUROPEAN PATENT APPLICATION

(21) Application number: **88307178.9**

(51) Int. Cl.⁴: **B 62 D 25/18**

(22) Date of filing: **03.08.88**

(30) Priority: **06.08.87 GB 8718600**

(43) Date of publication of application:
**08.02.89 Bulletin 89/06**

(84) Designated Contracting States:
**AT BE CH DE ES FR GB GR IT LI LU NL SE**

(71) Applicant: **ABAL ENGINEERING LIMITED**
**Unit One Mellors Road**
**Trafford Park Manchester M17 1PB (GB)**

(72) Inventor: **Bryan, John Raymond**
**33 Summers Way**
**Knutsford Cheshire (GB)**

(74) Representative: **Allen, Oliver John Richard et al**
**Lloyd Wise, Tregear & Co. Norman House 105-109 Strand**
**London, WC2R 0AE (GB)**

(54) Spray suppression flap.

(57) Spray suppression flap for fitting to the mudguard of a road vehicle. The flap has a ribbed surface comprising a central column (6) of upwardly extending V-shaped ribs (8) and flanking columns (13), disposed on each side of the central column (6), of horizontal (10) or downwardly declining (16) ribs leading to vertical channels (12), one at each side of the flap. This particular pattern of ribs results in improved spray suppression compared with known flaps of this type.

Fig. 1.

Fig. 2.

**Description**

## SPRAY SUPRESSION FLAP

The invention relates to spray suppression flaps for road vehicles.

It is known to fit road vehicles, especially heavy vehicles such as lorries and the like, with spray suppression flaps. Such flaps may, for example, be attached to the rear of a mudguard and thus hang down behind the wheel. The purpose of these flaps is to inhibit the dissemination of spray generated by the wheels in wet conditions.

Spray suppression flaps fitted to vehicles in the United Kingdom must conform to a British Standard. Flaps are tested for compliance with the requirements by spraying with a known volume of water from spray jets. To conform to the British Standard a specified percentage of the water must be collected immediately below the flap.

It is known to make spray suppression flaps from reinforced rubber or the like, which on the surface adjacent the wheel, have ribs which are upwardly inclined from either side of the centre line. These ribs have the effect of reducing the energy of the spray droplets when they impact the surface and flow up the ribs so that they are retained within the boundry of the flap. Even so, flaps of this design are only just able to conform to the present British Standard and an improvement in spray retention is much desired.

A spray suppression flap in accordance with the invention has a ribbed surface to be located adjacent a wheel of a road vehicle, the ribbed surface comprising a central column of upwardly extending V - shaped ribs and flanking columns, disposed on each side of said central column of horizontal or downwardly declining ribs leading to vertical channels, one at each side of the flap.

The width of the central column of V-shaped ribs is preferably about 30 cms. The width of the flanking column is preferably about 13 cms.

The arms of the V - shaped ribs of the central column may be at an angle of between 5° and 35° to the horizontal but are preferably 15° to the horizontal.

The ribs of the flanking portion may, in one embodiment of the invention be horizontal or, in the second embodiment of the invention, may be downwardly declining, preferably at an angle of about 15° to the horizontal.

The optimum relative widths of the central and flanking columns depend upon the relative angles of the ribs of the columns respectively.

The ribs themselves are preferably spaced about 1.3cms apart and protrude from the surface of the flap about 1.4cms.

The ribs are not perpendicular to the vertical axis of the flap but rather are angled downwardly. The angle subtended between the surface of the flap and the bottom surface of each rib may be between 45° to 85° and is preferably 75°.

The overall pattern of the ribs is symetrical about the central vertical axis of the flap.

The vertical edges of the flap are preferably moulded round to form vertical channels having a C - shaped cross-section open towards the ribs to provide a passage to remove water from the ribs and dispose of the water safely below the flap.

When the flap is in use on a road vehicle in wet conditions the spray becomes caught within the ribs of the flaps where its energy is dissipated as it runs up the arms of the V - shaped ribs.

Spray reaches the horizontal declining ribs of the flanking columns at a position in which its energy is dissipated and then it runs into the vertical channels on each side of the flap where it is chanelled straight down to the ground without further splashing or spray. In standard tests the spray suppression flap of the invention has been shown to be superior to known suppression flaps and may retain up to 75% of the water sprayed thereon. This is much superior to the arrangement in which the spray runs up inclined ribs throughout its passage across the flap, when the spray after it has lost its energy, may fall back down the face of the flap.

The invention will now be described by way of example with reference to the accompanying drawings in which;

Figure 1 is a spray suppression flap according to a first embodiment of the invention.

Figure 2 is a spray suppression flap according to a second embodiment of the invention and Figure 3 is a vertical cross-section of the flap showing the inclination of the protruding ribs.

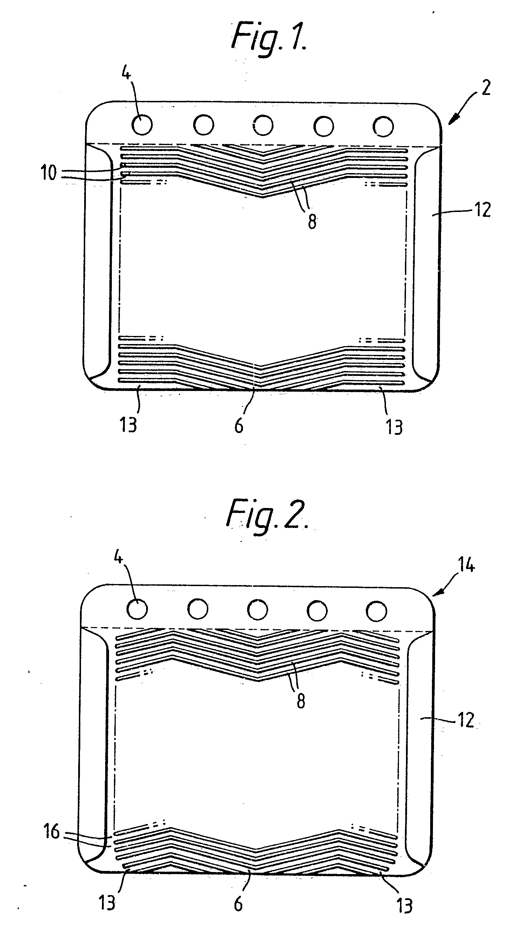

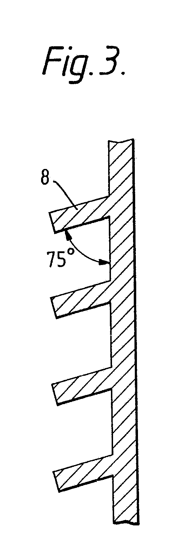

Referring to Figure 1, the flap has a generally rectangular shape and standard overall dimensions and is provided with a series of holes 4 near the top edge by which it may be fixed to the mudguard of a road vehicle so that it hangs down behind the wheel. The flap has a series of ribs on the surface adjacent the wheel. The ribbed surface has a central column 6 of V - shaped ribs 8 and flanking columns 13 with horizontal ribs 10. The V - shaped and horizontal ribs 8 and 10 are continuous with one another and protrude at a downwardly declining angle to the surface of the flap as shown in Figure 3.

The vertical edges of the flap form a channel 12 of C- shaped cross-section, open towards the ribbed surface.

Figure 2 shows a second embodiment of the invention in which the ribs 16 of the flanking position 13 slope downwardly towards the channel 12. The remaining features of the flap are substantially identical to those in Figure 1.

It has been found in standard tests that flaps having ribs arranged in accordance with the invention show improved spray suppression in comparison to known flaps of this type.

**Claims**

1. A spray suppresion flap for a vehicle having a ribbed surface to be located behind a wheel of the vehicle, the ribbed surface comprising a central column of upwardly extending V - shaped ribs and flanking columns, disposed on each side of said central column of ribs, which in use are horizontal or downwardly declining and which lead to 'vertical' channels, one at each side of the flap.

2. A spray suppression flap as claimed in claim 1 wherein the width of the central column is about 30cms.

3. A spray suppression flap as claimed in claims 1 or 2 wherein the width of the flanking columns is about 13cms.

4. A spray suppression flap as claimed in any preceeding claim wherein the arms of the V - shaped ribs are at an angle between 5° and 35° to the horizontal, preferably 15°.

5. A spray suppression flap as claimed in any preceeding claim wherein the downwardly declining ribs of the flanking portions are at 15° to the horizontal.

6. A spray suppression flap as claimed in any preceeding claim wherein the ribs protrude a distance of about 1.4 cms from the surface of the flap and are about 1.3cms apart.

7. A spray suppression flap as claimed in any preceeding claim in which its ribs depend outwardly and downwardly from the plane of the flap.

8. A spray suppression flap as claimed in claim 8 wherein the angle subtended between the surface of the flap and the bottom surface of each rib may be between 45° and 85°, preferably 75°.

9. A spray suppression flap as claimed in any preceeding claim wherein the overall pattern of the ribs is symmetrical about the central vertical axis of the flap.

10. A spray suppression flap as claimed in any preceeding claim wherein the vertical channels at the longitudinal edges of the flap have a C - shaped cross-section.

0302718

## Fig.1.

## Fig.2.

*Fig.3.*

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| P,A | EP-A-0 266 228 (SULLIVAN)<br>* Figures 7,18; abstract * | 1,7 | B 62 D 25/18 |
| A | EP-A-0 150 588 (UNIROYAL)<br>* Abstract; figure 2 * | 1,10 | |
| A | EP-A-0 202 059 (SULLIVAN)<br>* Figure 12; claim 1; abstract * | 1,9 | |
| A | US-A-4 382 606 (LANCASTER COLONY CORP.)<br>* Abstract; figure 5 * | 1,9 | |

TECHNICAL FIELDS SEARCHED (Int. Cl.4)

B 62 D

The present search report has been drawn up for all claims

| Place of search | Date of completion of the search | Examiner |
|---|---|---|
| THE HAGUE | 03-11-1988 | SCHMITTER J.M. |

EPO FORM 1503 03.82 (P0401)